Europäisches Patentamt

European Patent Office

Office européen des brevets

(19)

(11) Veröffentlichungsnummer : **0 162 189**
**B1**

(12) # EUROPÄISCHE PATENTSCHRIFT

(45) Veröffentlichungstag der Patentschrift :
27.07.88

(21) Anmeldenummer : 85100794.8

(22) Anmeldetag : 26.01.85

(51) Int. Cl.⁴ : **B 60 G  11/10**, F 16 F  1/26,
F 16 F  1/36

(54) Blattfeder, insbesondere für Kraftfahrzeuge, aus Faserverbundwerkstoff.

(30) Priorität : 21.04.84 DE 3415125

(43) Veröffentlichungstag der Anmeldung :
27.11.85 Patentblatt 85/48

(45) Bekanntmachung des Hinweises auf die Patenterteilung : 27.07.88 Patentblatt 88/30

(84) Benannte Vertragsstaaten :
AT BE CH DE FR GB IT LI LU NL SE

(56) Entgegenhaltungen :
GB-A-    542 663
PATENTS ABSTRACTS OF JAPAN, Band 7, Nr. 279
(M-262) [1424], 13 Dezember 1983; & JP - A - 58 156408
(NIHON HATSUJIYOU K.K.) 17-09-1983
PATENTS ABSTRACTS OF JAPAN, Band 7, Nr. 153
(M-226) [1298], 5 Juli 1983; & JP - A - 58 61343
(MITSUBISHI RAYON K.K.) 12-04-1983
PATENTS ABSTRACTS OF JAPAN, Band 8, Nr. 2 (M-266) [1439], 7 Januar 1984; & JP - A - 58 166147 (HINO JIDOSHA KOGYO K.K.) 01-10-1983
PATENTS ABSTRACTS OF JAPAN, Band 3, Nr. 105
(M-71), 5 September 1979; & JP - A - 54 79343 (TORAY K.K.) 25-06-1979

(73) Patentinhaber : **Hoesch Aktiengesellschaft**
**Eberhardstrasse 12**
**D-4600 Dortmund 1 (DE)**

(72) Erfinder : Geissler, Gerhard
**Kohlbergstrasse 11**
**D-5800 Hagen 8 (DE)**
Erfinder : **Mattmüller, Ernst**
**Landweg 1**
**D-5860 Iserlohn (DE)**
Erfinder : **Laskowski, Günter**
**Erlenweg 3**
**D-4750 Unna (DE)**

## Beschreibung

Die Erfindung betrifft eine Blattfeder, insbesondere für die Radaufhängung eines Kraftfahrzeuges, aus mindestens einer Federlage aus Faserverbundwerkstoff, die im Bereich der Mittenbefestigung formschlüssig mit der Achse verbunden ist, wobei die Federlage mehrere Querrippen aufweist, die in korrespondierende Quernuten eingreifen.

Bei Blattfedern aus Stahl werden üblicherweise die einzelnen Lagen durch eine einzige Federschraube zusammengehalten, die durch entsprechende Mittellöcher gesteckt wird. Der Kopf dieser Schraube hat nicht nur die Aufgabe, das Lagenpaket für die Lagerung und den Transport zusammenzuhalten, sondern dient auch als Fixierung gegenüber der Fahrzeugachse. Diese Fixierung erleichtert zum einen die Achsmontage, weil die Lage der Achse gegenüber der Feder exakt vorgegeben ist, indem der Schraubenkopf in eine entsprechende Vertiefung der Achsauflage versenkt wird. Zum anderen sichert diese Fixierung auch die Achse gegen Verschiebung in Längsrichtung der Blattfeder bei auftretenden Längskräften, z. B. durch Abbremsen des Fahrzeuges. Ohne diese Fixierung bestünde zwischen Blattfeder und Fahrzeugachse nur ein Kraftschluß, der bei extremen Bedingungen nicht zuverlässig ausreicht.

Bei Blattfedern aus Faserverbundwerkstoff muß die Fixierung und Sicherung gegen Längsverschieben anders und aufwendiger erfolgen, weil die Eigenart des faserverstärkten Kunststoffes Bohrungen senkrecht zum Federblatt im Bereich hoher Beanspruchungen verbietet.

Man hat (z. B. DE-A-32 38 099 und DE-C-31 50 161) versucht, die Gefährlichkeit einer Bohrung senkrecht zur Federlage dadurch zu mildern, daß nur eine mittlere Gewebeschicht seitlich aus der eigentlichen Federlage herausgeführt wird, die die Bohrungen zur Fixierung aufnehmen soll. Diese Ausführung ist nur für Blattfederlagen anwendbar, die aus Laminaten aufgeschichtet sind und benötigt weiterhin eine aufwendige starke Verbreiterung der eigentlichen Blattfederlage im Einspannbereich.

Bei der europäischen Patentanmeldung EP-A-0 092 399 ist punktuell in die Auflagefläche der Feder ein Metallbolzen mit abgeflachtem Bolzenkopf eingelassen, was eine Störung des Verlaufs der unidirektional angeordneten Verstärkungsfasern bedingt. Dies kann auch weder durch die Anbringung von Nuten im Bolzenkopf noch durch dessen flache Ausbildung beseitigt werden. Die durch die flache Kopfform bedingte geringe Berührungsfläche läßt darüber hinaus wegen der hohen Flächenpressung nur die Übertragung geringer Verschiebekräfte zwischen Blattfeder und Achse zu.

Bei einer Blattfeder gemäß JP-A-156 408 erfolgt eine Kraftübertragung in Achsrichtung nur durch Reibung, so daß es z. B. durch stoßartige Seitenkräfte bei der Kurvenfahrt zu seitlichen, aber axialen Verschiebungen zwischen Blattfeder und Achse und damit zur Verschlechterung des Geradeauslaufs des Fahrzeuges kommen kann.

Der Erfindung liegt die Aufgabe zugrunde, eine Blattfeder der eingangs näher bezeichneten Art zu schaffen, bei der eine leicht herstellbare, einwandfreie auch für die Übertragung größere Kräfte geeignete Fixierung ohne Bohrungen senkrecht oder quer zur Federlage und bei gleichbleibender Breite der Federlage gewährleistet ist.

Gemäß der Erfindung wird dazu vorgeschlagen, daß bei einer Blattfeder der vorliegenden Gattung die Querripen pfeilförmig in Längsrichtung der Blattfeder angeordnet sind.

Durch die erfindungsgemäße Blattfeder werden vorteilhaft auch Seitenkräfte formschlüssig übertragen und somit seitliche, also axiale Verschiebungen gegenüber der Achse vermieden.

In weiterer Ausgestaltung des Erfindungsgedankens sind bei mehreren Federlagen auch die Berührungsflächen der einzelnen Federlagen mit Querrippen und korrespondierenden Quernuten ausgebildet.

Die Querrippen können vorteilhaft ein Doppelkeilprofil oder ein Wellenprofil aufweisen.

Es kann weiterhin auch zweckmäßig sein, daß die Quernuten in einer metallischen Zwischenplatte angeordnet sind, die mit einem Bolzen in die eben ausgebildete Auflagefläche eingreift. Dadurch ist es z. B. auch möglich, anstatt einer herkömmlichen Stahlfeder eine erfindungsgemäße Blattfeder einzusetzen, ohne die Auflagefläche nacharbeiten zu müssen.

Nachstehend wird die Erfindung, die bei einfacher Herstellung und Ausnutzung nahezu der gesamten Berührungsfläche zur Kraftübertragung eine sichere und genaue Fixierung der Blattfeder auf der Achse gewährleistet, anhand von schematisch dargestellten Ausführungsbeispielen näher erläutert.

Es zeigt

Fig. 1 einen Querschnitt in Achsrichtung gesehen durch die Mittenauflage bei einer Federlage

Fig. 2 bei zwei Federlagen

Fig. 3 eine Draufsicht der Auflagefläche der Achse gemäß Fig. 2 mit in Pfeilform angeordneten Quernuten

Fig. 4 einen Teilausschnitt entsprechend der Stelle V in Fig. 1, jedoch bei einer Ausführungsform mit einer Zwischenplatte

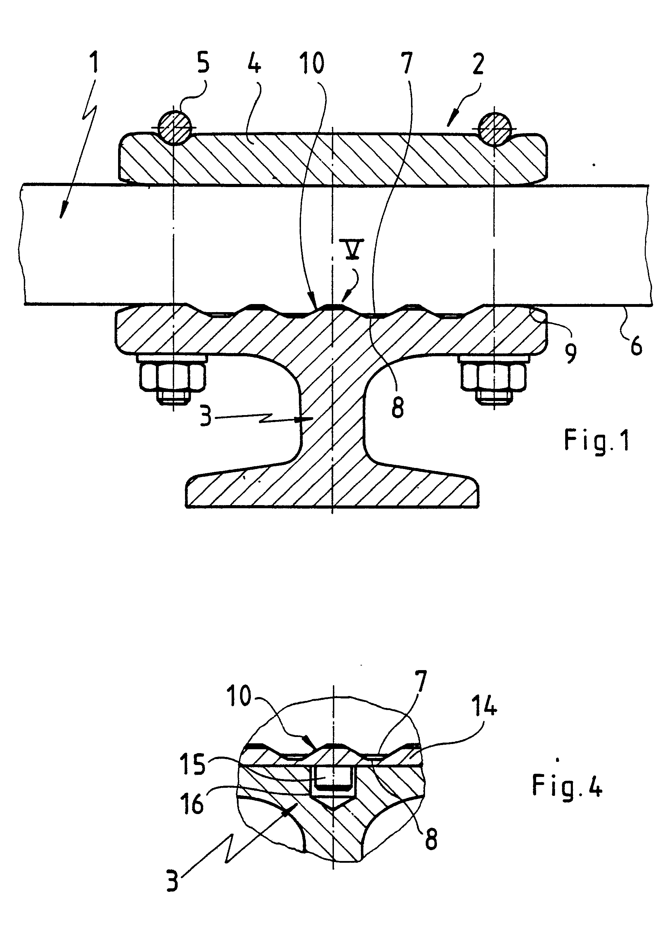

Gemäß Fig. 1 ist die Federlage 1 in der Mittenbefestigung 2 der Achse 3 mittels einer üblichen Deckplatte 4 und zweier Federbriden 5 befestigt. Die der Achse zugekehrte Seite 6 der Federlage 1 greift mit Querrippen 7 mit Doppelkeilprofil in korrespondierende Quernuten 8 der Auflagefläche 9 der Achse 3 ein. Die aus den Querrippen 7 und den Quernuten 8 gebildete Berührungsfläche 10 ergibt eine sichere Formschlußverbindung.

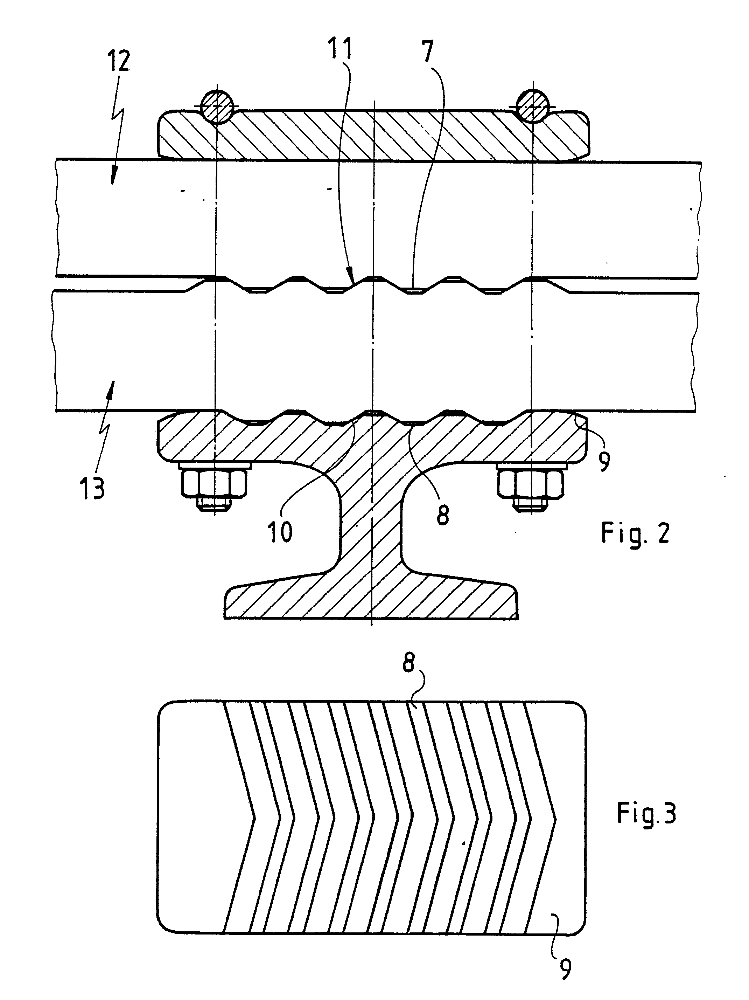

Gemäß Fig. 2 ist in gleicher Weise auch die Berührungsfläche 11 der Federlagen 12, 13 untereinander mit korrespondierenden Querrippen 7 und Quernuten 8 ausgebildet, wobei diese in Pfeilform (Fig. 3) angeordnet sind.

Fig. 4 verdeutlicht eine Ausführungsform, bei der die Quernuten 8 — statt wie bei Fig. 1 unmittelbar in der Auflagefläche — in einer Zwischenplatte 14 von der Größe der Auflagenfläche angeordnet sind. Die Zwischenplatte 14 greift ihrerseits mit einem Bolzen 15 in eine Bohrung 16 der Achse 3 ein.

1 Federlage
2 Mittenbefestigung
3 Achse
4 Deckplatte
5 Federbride (Federbügel)
6 Seite
7 Querrippe
8 Quernut
9 Auflagefläche
10 Berührungsfläche
11 Berührungsfläche
12 Federlage
13 Federlage
14 Zwischenplatte
15 Bolzen
16 Bohrung

**Patentansprüche**

1. Blattfeder, insbesondere für die Radaufhängung eines Kraftfahrzeuges, aus mindestens einer Federlage (1) aus Faserverbundwerkstoff, die im Bereich der Mittenbefestigung formschlüssig mit einer Achse verbunden ist, wobei die Federlage mehrere Querrippen (7) aufweist, die in korrespondierende Quernuten (8) eingreifen, dadurch gekennzeichnet, daß die Querrippen (7) pfeilförmig in Längsrichtung der Blattfeder angeordnet sind.

2. Blattfeder nach Anspruch 1, dadurch gekennzeichnet, daß bei mehreren Federlagen auch die Berührungsflächen (11) der einzelnen Federlagen untereinander mit Querripen und korrespondierenden Quernuten ausgebildet sind.

3. Blattfeder nach Anspruch 1 oder 2, dadurch gekennzeichnet, daß die Querrippen ein Doppelkeilprofil aufweisen.

4. Blattfeder nach Anspruch 1 oder 2, dadurch gekennzeichnet, daß die Querrippen ein Wellenprofil aufweisen.

5. Blattfeder nach einem oder mehreren der vorstehenden Ansprüche, dadurch gekennzeichnet, daß die Quernuten (8) in einer metallischen Zwischenplatte (14) angeordnet sind, die mit einem Bolzen (15) in die eben ausgebildete Auflagefläche (9) eingreift.

**Claims**

1. Leaf spring, especially for the wheel suspension of a powered vehicle, comprising at least one spring leaf (1) of fibre reinforced material, which is connected with an axle positively in the region of the central mounting, where the spring leaf comprises several transverse ribs (7), which engage in corresponding transverse grooves (8), characterised in that the transverse ribs (7) are arranged in arrow shape in the longitudinal direction of the leaf spring.

2. Leaf spring according to claim 1, characterised in that with several spring leaves, the contact surfaces (11) of the separate spring leaves are constructed underneath with transverse ribs and corresponding transverse grooves.

3. Leaf spring according to claim 1 or 2, characterised in that the transverse ribs have a double wedge profile.

4. Leaf spring according to claim 1 or 2, characterised in that the transverse ribs have a wavy profile.

5. Leaf spring according to any one or more of the preceding claims, characterised in that the transverse grooves (8) are arranged in a metallic intermediate plate (14), which engages with a bolt (15) in a flat constructed supporting surface (9).

**Revendications**

1. Ressort à lames, en particulier pour la suspension d'un véhicule à moteur, comprenant au moins une couche élastique (1) en matière composite renforcée par des fibres, qui est relié mécaniquement à un axe, dans la zone de la fixation centrale, la couche élastique présentant plusieurs nervures transversales (7) qui s'insèrent dans des rainures transversales (8) correspondantes, caractérisé en ce que les nervures transversales (7) sont disposées en chevrons dans le sens longitudinal du ressort à lames.

2. Ressort à lames selon la revendication 1, caractérisé en ce que, pour plusieurs couches élastiques, les surfaces de contact (11) des diverses couches élastiques entre elles sont formées par des nervures transversales et des rainures transversales correspondantes.

3. Ressort à lames selon la revendication 1 ou 2, caractérisé en ce que les nervures transversales présentent un double profil trapézoïdal.

4. Ressort à lames selon la revendication 1 ou 2, caractérisé en ce que les nervures transversales présentent un profil ondulé.

5. Lame de ressort selon une ou plusieurs des revendications qui précèdent, caractérisé en ce que les rainures transversales (8) sont prévues dans une plaque métallique intermédiaire (14) qui s'accroche par un boulon (15) dans la surface d'appui (9) ainsi formée.

Fig. 1

Fig. 4

**12** **11** **7**

**13** **10** **8** **9**

Fig. 2

**8**

Fig. 3

**9**